# EUROPÄISCHE PATENTSCHRIFT

(11) **EP 0 990 405 B1**
(45) Veröffentlichungstag und Bekanntmachung des Hinweises auf die Patenterteilung: **09.06.2004**
(21) Anmeldenummer: 99118857.4
(22) Anmeldetag: 18.09.1999
(51) Int. Cl.: A47J 39/00, F25D 11/02

(54) **Gerät zum Kühlen und Erwärmen von Speisen**
Apparatus for cooling and warming dishes
Appareil à refroidir et rechauffer des denrées

(30) Priorität: 02.10.1998 DE 29817594 U
(43) Veröffentlichungstag der Anmeldung: 05.04.2000
(73) Patentinhaber: Miller, Johann, 87727 Babenhausen (DE)
(72) Erfinder: Miller, Johann, 87727 Babenhausen (DE)
(74) Vertreter: Hutzelmann, Gerhard

(56) Entgegenhaltungen:
- EP-A- 0 092 537
- EP-A- 0 277 337
- US-A- 3 199 579
- US-A- 4 317 441
- US-A- 4 884 626

## Beschreibung

Die Erfindung bezieht sich auf ein Gerät gemäß dem Oberbegriffes des Anspruchs 1.

Der Erfindung liegt die Aufgabe zugrunde, ein Gerät vorzuschlagen, mit dem Speisen der unterschiedlichsten Art gekühlt und erwärmt werden können, ohne daß bei einem Wechsel der Behandlung die Speisen aus dem Gerät herausgenommen werden müssen.

Diese Aufgabe wird erfindungsgemäß durch die Merkmale im kennzeichnenden Teil des Anspruchs 1 gelöst.

Insbesondere bei sehr empfindlichen Lebensmitteln, die nur bei ständiger und ununterbrochener Kühlung frisch bleiben, hat sich ein derartiges Gerät bewährt. Soll beispielsweise Leberkäse, der sehr empfindlich ist, sehr früh am Tage geliefert werden, so ist es notwendig, diesen bis zum Backen zu kühlen und erst kurz vor der Auslieferung zu erhitzen und damit zu backen.

Es ist auch denkbar Leberkäse über eine größere Entfernungen zu transportieren und im heißen Zustand auszuliefern, wobei mit einem derartigen Gerät der Leberkäse über einen Großteil des Transportweges gekühlt werden kann und erst kurz vor dem Erreichen des Ziels auf Heizen umgeschaltet und der Leberkäse am Zielpunkt gebacken und heiß aus dem Gerät entnommen werden kann.

Aber auch andere Lebensmittel lassen sich mit dem Gerät im gekühlten Zustand aufbewahren und manuell oder vorprogrammiert erwärmen bzw. garen.

Eine vorteilhafte Ausgestaltung der Erfindung liegt darin, daß eine Steuereinrichtung vorgesehen ist, welche eine Temperatursteuereinrichtung für das Kühlaggregat und eine Zeitsteuereinrichtung zum Abschalten des Kühlaggregates und Einschalten der Heizeinrichtung aufweist.

Mit einer derartigen Steuereinrichtung läßt sich der Kühlvorgang weitgehend automatisieren und das Ende der Kühlung und der Beginn des Heizens voreinstellen.

Gemäß einer weiteren Ausgestaltung der Erfindung ist es auch möglich, die Steuereinrichtung mit einer Temperatursteuereinrichtung zum Steuern der Heizeinrichtung zu versehen.

Damit läßt sich auch die Intensität des Aufheizens des Lebensmittels vorprogrammieren.

Eine weitere vorteilhafte Ausgestaltung der Erfindung liegt darin, daß das Steuergerät zusätzlich mit einer Zeitsteuereinrichtung für die Heizeinrichtung versehen ist.

Damit ist es möglich, den Zeitablauf des Aufheizens voreinzustellen.

Eine vorteilhafte weitere Ausgestaltung der Erfindung ist dadurch gekennzeichnet, daß eine Einrichtung zur Erzeugung von Frischwasserdampf vorgesehen ist, zum Beaufschlagen des Aufnahmefachs mit frischem Wasserdampf.

Dadurch ist während der Aufheizphase ein Dämpfen des Lebensmittels möglich, wie dies für verschiedene Lebensmittel sehr vorteilhaft ist.

Dazu hat es sich als sehr vorteilhaft erwiesen, wenn gemäß einer weiteren Ausgestaltung der Erfindung eine Heizeinrichtung vorgesehen ist, die mit Frischwaser zur Erzeugung von Wasserdampf beaufschlagbar ist.

Hierdurch kann auf einfache Art der benötigte Frischwasserdampf gewonnen werden.

Ebenfalls sehr vorteilhaft ist es, wenn gemäß einer weiteren Ausgestaltung der Erfindung eine Einrichtung zum Einblasen von Heißluft in das Aufnahmefach vorgesehen ist.

Eine weitere vorteilhafte Ausgestaltung der Erfindung ist dadurch gekennzeichnet, daß unterhalb des Aufnahmefach eine herausziehbare Auffangwanne vorgesehen ist.

Insbesondere beim Öffnen der Verschlußtür am Ende des Aufheizvorganges ist es nicht immer zu vermeiden, daß Flüssigkeit aus dem Aufnahmefach herausläuft. Durch die Auffangwanne wird verhindert, daß diese austretende Flüssigkeit am Gerät herunterläuft.

Als besonders vorteilhaft hat es sich dabei ergeben, wenn gemäß einer weiteren Ausgestaltung der Erfindung eine in die Auffangwanne mündende mit einer Sammelund Ablaufrinne versehen ist.

Dadurch ist ein gezieltes Abführen der beim Öffnen der Verschlußtür austretenden Flüssigkeit gewährleistet.

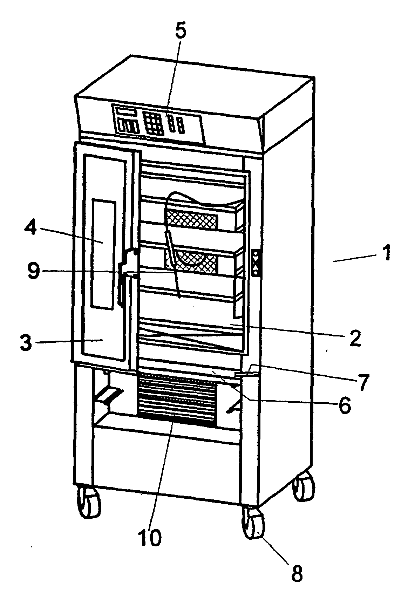

In der Zeichnung ist die Erfindung anhand eines Ausführungsbeispiels veranschaulicht. Dabei zeigt die Figur:
eine schaubildliche Darstellung eines Gerätes zum Kühlen und Erwärmen von Lebensmitteln.

Mit 1 ist in der Figur ein Gerät bezeichnet, das zum Erwärmen und Kühlen von Speisen dient. Dieses Gerät hat ein Aufnahmefach 2 in welches die Speisen eingestellt werden. Das Aufnahmefach ist mit einer Verschlußtür 3 versehen, in welcher ein durchsichtiger Teilabschnitt 4 vorgesehen ist, um ein Beobachten des Gar- bzw. Backvorganges beim Erwärmen der Speisen zu ermöglichen. Das Aufnahmefach ist mit einem nicht dargestellten Kühlaggregat und mit einer ebenfalls nicht dargestellten Heizeinrichtung ausgerüstet. Darüber hinaus ist eine Steuereinrichtung vorgesehen, die ein Bedienungs- und Einstellpaneel 5 aufweist, an dem die verschiedenen Parameter für die Kühlung bzw. die Heizung eingestellt werden können. So können sowohl die Kühlzeit als auch die Kühltemperatur vorgewählt werden. Darüber hinaus ist der Einschaltzeitpunkt der Heizung, die Heizleistung und die zu erreichende Temperatur in der Speise einstellbar. Auch ist es möglich über eine entsprechende Einstellung einen Zeitpunkt für das Abschalten der Heizung einzugeben.

Das Gerät 1 verfügt darüber hinaus über eine nicht dargestellte Einrichtung zur Dampferzeugung mit einem zugehörigen Dampferzeuger, der aus einer Heizeinrichtung einer einer Zuführeinrichtung für Frischwasser besteht. Bei entsprechenden Speisen kann damit zusätzlich zur Heizung oder auch separat eine Dampfbeaufschlagung erfolgen.

Darüber hinaus ist ein Heißluftgebläse vorgesehen, mit dem Heißluft in das Aufnahmefach geblasen werden kann.

Unterhalb des Aufnahmefaches 2 ist eine Auffangwanne 6 angeordnet, die herausziehbar gelagert ist. An der Vorderseite des Gerätes 1 ist unterhalb der Tür 3 eine Sammel- und Ablaufrinne 7 angeordnet, die in die Auffangwanne 6 mündet.

Insbesondere beim Öffnen der Tür 3 austretendes Kondensat und eventuell überlaufender Saft z.B. beim Braten von Leberkäse, wird so wirksam abgeleitet.

Das Gerät ist an seiner Unterseite mit vier feststellbaren Rollen 8 versehen, mit deren Hilfe das Gerät leicht verstellt werden kann.

Im Innern des Aufnahmefaches ist eine Meßsonde 9 vorgesehen, die insbesondere beim Braten von Fleisch bzw. Backen von Leberkäse verwendet wird und welche die Kerntemperatur des Lebensmittels ermittelt und an die Steuereinrichtung weitergibt.

Unterhalb des Aufnahmefaches 2 ist noch ein Abstellraum 10 vorgesehen, der zum Abstellen von Speisen vor oder nach der Behandlung im Aufnahmefach dient.

## Patentansprüche

1. Gerät(1) zum Kühlen und Erwärmen von Speisen, mit einem Aufnahmefach(2) für die Speisen, sowie mit einer Verschlußtür(3), die vorzugsweise mit einem durchsichtigen Teilabschnitt(4) versehen ist, wobei das Aufnahmefach(2) sowohl mit einem Kühlaggregat als auch mit einer Heizeinrichtung ausgerüstet ist, die wahlweise einschaltbar sind und mit einer Steuereinrichtung, welche eine Temperatursteuereinrichtung für das Kühlaggregat und eine Zeitsteuereinrichtung zum Abschalten des Kühlaggregates und Einschalten der Heizeinrichtung aufweist, sowie mit einer Temperatursteuereinrichtung zum Steuern der Heizeinrichtung, wobei das Steuergerät zusätzlich mit einer Zeitsteuereinrichtung für die Heizeinrichtung versehen ist, wobei die Heizeinrichtung zum Backen bzw. Garen der Speisen ausgelegt ist, **dadurch gekennzeichnet, dass** unterhalb des Aufnahmefachs (2) eine herausziehbare Auffangwanne (6) vorgesehen ist.

2. Gerät nach Anspruch 1, **dadurch gekennzeichnet, daß** eine Einrichtung zur Erzeugung von Frischwasserdampf vorgesehen ist, zum Beaufschlagen des Aufnahmefachs(2) mit frischem Wasserdampf.

3. Gerät nach Anspruch 2, **dadurch gekennzeichnet, daß** eine Heizeinrichtung vorgesehen ist, die mit Frischwasser zur Erzeugung von Wasserdampf beaufschlagbar ist.

4. Gerät nach einem der vorhergehenden Ansprüche, **dadurch gekennzeichnet, daß** eine Einrichtung zum Einblasen von Heißluft in das Aufnahmefach(2) vorgesehen ist.

5. Gerät nach einem der vorhergehenden Ansprüche, **dadurch gekennzeichnet, daß** eine in die Auffangwanne(6) mündende Sammel- und Ablaufrinne(7) vorgesehen ist.

## Claims

1. Device (1) for cooling and heating food, with a compartment (2) to hold the food and with a closure door (3) that is preferably provided with a transparent section (4), where the compartment (2) is equipped not only with a cooling unit but also with a heating unit that can be switched on alternatively and are fitted with a control unit that has a temperature control unit for the cooling unit and a time control unit to switch off the cooling unit and switch on the heating unit and with a temperature control unit to control the heating unit, where the control unit is provided in addition with a time control unit for the heating unit and where the heating unit is designed to bake and / or cook the food, **wherein** a collection pan (6) that can be pulled out is provided underneath the compartment (2).

2. Device according to claim 1, **wherein** a unit for the generation of fresh water steam is provided to apply fresh steam to the compartment (2).

3. Device according to claim 2, **wherein** a heating unit is provided that can be supplied with fresh water to generate steam.

4. Device according to one of the previous claims, **wherein** a unit is provided to blow hot air into the compartment (2).

5. Device according to one of the previous claims, wherein a collection and drainage channel (7) that leads to the collection pan (6) is provided.

## Revendications

1. Appareil (1) pour refroidir et réchauffer des denrées, avec un compartiment de réception (2) pour les denrées, ainsi qu'avec une porte de fermeture (3), qui, de préférence, est munie d'un tronçon partiel (4) transparent, le compartiment de réception (2) étant équipé, tant d'un groupe de réfrigération, qu'également d'un dispositif de chauffage, qui peuvent être mis en service au choix, et avec un dispositif de commande, qui présente un dispositif de commande de la température, pour le groupe de réfrigération, et un dispositif de commande minuté, pour la mise hors service du groupe de réfrigération et la mise en service du dispositif de chauffage, ainsi qu'avec un dispositif de commande de la température, pour commander le dispositif de chauffage, l'appareil de commande étant en plus muni d'un dispositif de commande minuté pour le dispositif de chauffage, le dispositif de chauffage étant conçu pour cuire, respectivement faire mijoter des denrées, **caractérisé en ce qu'**un bac de captage (6) extractible est prévu au-dessous du compartiment de réception (2).

2. Appareil selon la revendication 1, **caractérisé en ce qu'**un dispositif de production de vapeur d'eau d'apport est prévu, pour alimenter le compartiment de réception (2) de vapeur d'eau d'appoint.

3. Appareil selon la revendication 2, **caractérisé en ce qu'**un dispositif de chauffage est prévu, pouvant être alimenté d'eau d'appoint pour produire de la vapeur d'eau.

4. Appareil selon l'une des revendications précédentes, **caractérisé en ce qu'**un dispositif est prévu pour insuffler de l'air chaud dans le compartiment de réception (2).

5. Appareil selon l'une des revendications précédentes, **caractérisé en ce qu'**une goulotte collectrice et d'évacuation (7), débouchant dans le bac de captage (6), est prévue.
